# EUROPÄISCHE PATENTSCHRIFT

(11) **EP 3 074 228 B1**
(45) Veröffentlichungstag und Bekanntmachung des Hinweises auf die Patenterteilung: **26.09.2018**
(21) Anmeldenummer: 14796457.1
(22) Anmeldetag: 30.10.2014
(51) Int. Cl.: B32B 27/32, C08J 5/18, G09F 3/10

(54) **ETIKETTEN UND ABDECKBAHNEN**
LABELS AND COVERING WEBS
ÉTIQUETTES ET BANDES DE RECOUVREMENT

(30) Priorität: 27.11.2013 DE 102013113120
(43) Veröffentlichungstag der Anmeldung: 05.10.2016
(73) Patentinhaber: Infiana Germany GmbH & Co. KG, 91301 Forchheim (DE)
(72) Erfinder: SCHUHMANN, Michael, 90613 Großhabersdorf (DE); MAUSER, Matthias, 91353 Hausen (DE)
(74) Vertreter: Epping - Hermann - Fischer
(86) Internationale Anmeldenummer: PCT/EP2014/073360
(87) Internationale Veröffentlichungsnummer: WO 2015/078654

(56) Entgegenhaltungen:
- EP-A1- 1 803 772
- EP-A1- 1 813 423
- EP-A1- 2 022 824
- EP-A1- 2 305 751
- EP-A1- 2 452 959
- EP-A1- 2 548 920
- US-A1- 2007 059 545
- US-A1- 2011 076 905
- US-A1- 2012 233 965
- US-B1- 7 070 852

## Beschreibung

Die vorliegende Erfindung betrifft bei einseitiger Wärmebehandlung dimensionsstabile Etiketten und Abdeckbahnen.

Für Anwendungen, bei denen es zu einer einseitigen Wärmebehandlung kommt, werden im Stand der Technik zumeist PVC-Folien eingesetzt, da diese keinen Schüssel-Effekt (auf englisch: "curling effect") aufweisen. Problematisch bei PVC-Folien ist jedoch deren mangelnde Recyclingfähigkeit.

Aus der Druckschrift DE 10246864 A1 ist eine PVC-freie Abdeckbahn aus einem Folien-Bitumen-Verbund umfassend zwei Folienschichten mit unterschiedlichen Wärmeausdehnungskoeffizienten zur Vermeidung des Schüssel- bzw. Curling-Effekts bekannt.

EP 2022824 A1 offenbart Folien mit mindestens einer ersten Schicht umfassend mindestens 50 Gew.-% statistisches heterophasiges Polypropylen-(Block)copolymer und ein weiteres statistisches Polypropylen-Copolymer, wobei die Dicke der ersten Schicht wenigstens 5 µm beträgt und die Gesamtdicke der Folie wenigstens 20 µm beträgt.

US 2012/233965 A1 offenbart Folien mit mindestens einer ersten Schicht (D) umfassend 100 Gew.-% statistisches heterophasiges Polypropylen-(Block) copolymer, mit einer zweiten gegenüber mineralischen Ölen undurchlässigen Barriereschicht (A), und mit einer haftvermittelnden Schicht (E) zwischen der ersten Schicht (D) und der zweiten Schicht (A), wobei die Dicke der ersten Schicht wenigstens 5 µm beträgt und die Dicke der Folie wenigstens 20 µm beträgt. Die Druckschrift erwähnt weiter, dass die Barriereschicht EVOH und Polyamid umfassen kann.

EP 2548920 A1 offenbart Folien mit mindestens einer ersten Schicht umfassend mindestens 50 Gew.-% statistisches heterophasiges Polypropylen-(Block)copolymer, wobei die Dicke der ersten Schicht wenigstens 5 µm beträgt und die Gesamtdicke der Folie wenigstens 20 µm.

EP 2305751 A1 offenbart Folien mit mindestens einer ersten Schicht umfassend mindestens 50 Gew.-% statistisches heterophasiges Polypropylen-(Block)copolymer und ein weiteres Polypropylen-Polymer, mit einer zweiten Schicht umfassend Polypropylen-Polymer, und mit einer Barriereschicht umfassend Polyamid und/oder EVOH, wobei die Dicke der ersten Schicht wenigstens 5 µm beträgt und die Gesamtdicke der Folie wenigstens 20 µm beträgt.

EP 1803772 A1 offenbart Folien mit mindestens einer ersten Schicht umfassend mindestens 50 Gew.-% statistisches heterophasiges Polypropylen-(Block)copolymer, wobei die Dicke der ersten Schicht wenigstens 5 µm beträgt und die Gesamtdicke der Folie wenigstens 20 µm beträgt.

US 7,070,852 B1 offenbart Folien umfassend:
- eine erste Schicht (A) umfassend mindestens 50 Gew.-% statistisches heterophasiges Polypropylen-(Block)copolymer und 50 Gew.-% Polypropylen-Polymer,
- eine zweite Schicht (B) umfassend statistisches heterophasiges Polypropylen-(Block)copolymer
- eine dritte Schicht (C) umfassend Polypropylen-Polymer
- eine gegenüber mineralischen Ölen undurchlässigen Barriereschicht (E)
- eine haftvermittelnde Schicht (D) zwischen der ersten Schicht (A) und der Schicht (E),
wobei die Dicke der ersten Schicht wenigstens 5 µm beträgt und die Gesamtdicke der Folie wenigstens 20 µm beträgt.

EP 2452959 A1 offenbart Folien mit mindestens einer ersten Schicht umfassend mindestens 50 Gew.-% statistisches heterophasiges Polypropylen-(Block) copolymer.

Eine Aufgabe der vorliegenden Erfindung ist es, Etiketten und Abdeckbahnen umfassend eine recyclingfähige, kostengünstige und in der Leistung einer PVC- Folie vergleichbare Folie bereitzustellen.

Die vorstehende Aufgabe wird durch ein Etikett gemäß Anspruch 1 und eine Abdeckbahn gemäß Anspruch 4 gelöst. Bevorzugte Ausführungsformen werden in den Unteransprüchen dargestellt.

Die erfindungsgemäßen Etiketten und Abdeckbahnen umfassen jeweils eine Folie mit mindestens einer ersten Schicht umfassend mindestens 50 Gew.-% statistisches heterophasiges Polypropylen-(Block)copolymer.

Statistisches heterophasiges Polypropylen-(Block)copolymer (englisch "random polypropylene heterophasic (block)copolymer" oder abgekürzt "r-PP-HeCo" genannt) besteht aus einer homogenen Phase aus Polypropylen mit kleinen Mengen an Ethylen und Buten in statistischer (Block-)Verteilung. Diese kontinuierliche Phase stellt Rigidität und Wärmebeständigkeit bereit. Die zweite Phase ist eine feindispergierte Phase aus Ethylen-Propylenkautschuk, einem statistischen Copolymer aus Ethylen und Propylen, worin Ethylen überwiegt. Diese Phase gewährleistet eine innere Polsterung und Elastizität, was die Stoßfestigkeit und Reißbeständigkeit verbessert. Beide Phasen werden *in situ* im Reaktor über ein sequentielles Polymerisationsverfahren mit Hilfe von Ziegler-Natta- oder Metallocen-Katalysatoren hergestellt.

In einem ersten Aspekt betrifft die vorliegende Erfindung ein Etikett nach einem der Ansprüche 1 bis 3, wobei die Dicke der Schicht (1) bzw. die Gesamtdicke der Folie wie in Ansprüchen 9 bzw. 10 spezifiziert sein können. Vorzugsweise umfasst das Etikett folgende 4 Schichten in der angegebenen Reihenfolge: eine erste Schicht umfassend mindestens 50 Gew.-% statistisches heterophasiges Polypropylen-(Block)copolymer, eine zweite Schicht aus Polypropylen-Polymer oder Polypropylen-Cöpolymer, eine dritte Schicht aus Haftklebeschicht und eine vierte Schicht aus Papier.

In einem zweiten Aspekt der Erfindung betrifft die vorliegende Erfindung eine Abdeckbahn nach einem der Ansprüche 4 bis 8, , wobei die Dicke der Schicht (1) bzw. die Gesamtdicke der Folie wie in Ansprüchen 9 bzw. 10 spezifiziert sein können. Vorzugsweise umfasst die Abdeckbahn folgende 6 Schichten in der angegebenen Reihenfolge: eine erste Schicht umfassend mindestens 50 Gew.-% statistisches heterophasiges Polypropylen-(Block)copolymer, eine zweite Schicht umfassend einen Haftvermittler, eine dritte Schicht aus Polyamid, eine vierte Schicht umfassend einen Haftvermittler, eine der ersten Schicht entsprechende fünfte Schicht, und als sechste Schicht umfassend eine Klebemasse. Vorzugsweise ist die Klebemasse Bitumen oder Polybitumen. Zweckmäßigerweise ist die Klebemasse mit einer Trennfolie oder Trennpapier als weitere Schicht geschützt, welches während der Applikation entfernt werden kann.
- Figur 1: zeigt eine bevorzugte Ausführungsform einer Folie mit zwei Schichten.
- Figur 2: zeigt eine bevorzugte Ausführungsform einer Folie mit fünf Schichten.
- Figur 3: zeigt eine bevorzugte Ausführungsform eines Etiketts.
- Figur 4: zeigt eine bevorzugte Ausführungsform einer Abdeckbahn.

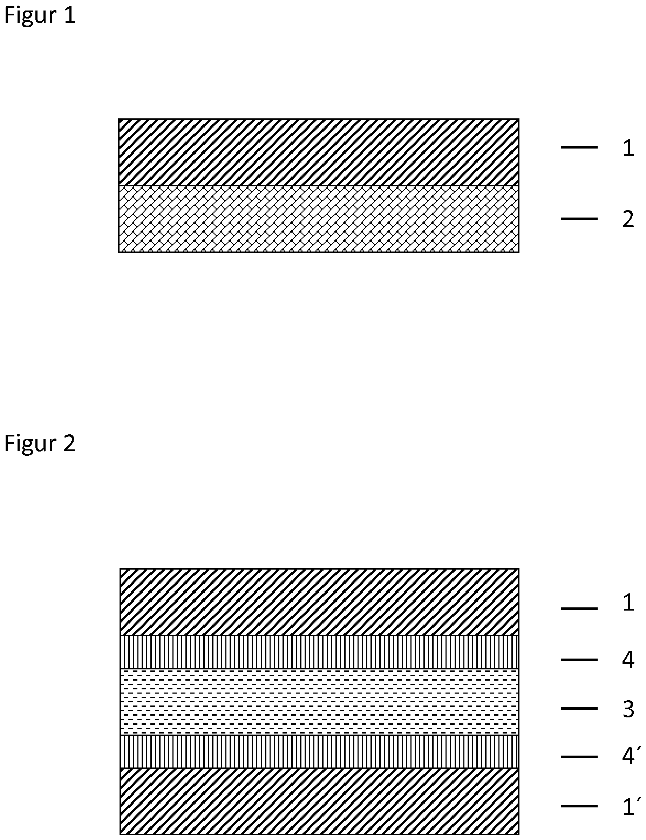

Figur 1 zeigt eine Folie mit mindestens einer ersten Schicht (1) umfassend eine Mischung aus 50 Gew.-% heterophasigen statistischen Polypropylen-(Block)Copolymer und heterophasigen Polypropylen-Copolymer. Die zweite Schicht (2) der Folie besteht aus Polypropylen.

Durch die Mischung aus heterophasigen Polypropylen-(Block)Copolymer und mindestens 50 Gew.-% statistischen Polypropylen heterophasigen (Block)Copolymer wird eine Minimierung von Kristallisationseffekten, wie einer Rekristallisation von Polypropylen, und Schrumpfeffekten bei jeweils einseitig wirkenden Temperaturen und ein einseitiges Schüsseln ("Curling") zur temperatur-einwirkenden Seite vermieden. Um eine stabile Verarbeitbarkeit zu erreichen, wird bevorzugt unterhalb des Schmelzpunktes aller Polymere beschichtet oder bedruckt.

Es hat sich gezeigt, dass die alleinige Verwendung von statistischen Polypropylen(r-PP; random Polyproylen) für eine Folie hergestellt durch das Blasfolien- oder Castfolienverfahren auf Grund der entstehenden Molekülorientierung für Anwendungen, bei denen einseitig wirkende Temperaturen auftreten, zu starke Schrumpf- und Curlingeffekte verursacht.

Dagegen können Curling-Effekte und zu starke Schrumpfeffekte durch die Verwendung von heterophasigen statistischem Polypropylen-Copolymer allein oder als Mischung aus mindestens 50 Gew.-% heterophasigen statistischem Polypropylen-Copolymer und einem weiteren Polypropylen-Polymer oder Polypropylen-Copolymer, wie in Figur 1 in Schicht 1 vorhanden, vermieden werden.

Figur 2 zeigt eine weitere bevorzugte Ausführungsform der erfindungsgemäßen Folie. Die Folie ist als Verbund aus fünf Schichten ausgestaltet. Schicht 1 entspricht der Schicht in der ersten Ausführungsform. Es folgt eine Haftvermittlungsschicht 4. Hierauf ist eine Barriereschicht 3 vorgesehen, die die Migration von mineralischen Ölen verhindert. Die Barriereschicht 3 kann zum Beispiel aus einem Polyamid, einer Polyamidlegierung, PET, O-PET oder einem Lack bestehen. Hierauf folgen die den Schichten 4 und 1 entsprechenden Schichten 4' und 1', sodass insgesamt ein symmetrischer Aufbau entsteht. Alternativ ist auch ein Folienverbund aus den Schichten 1, 4 und 3 möglich.

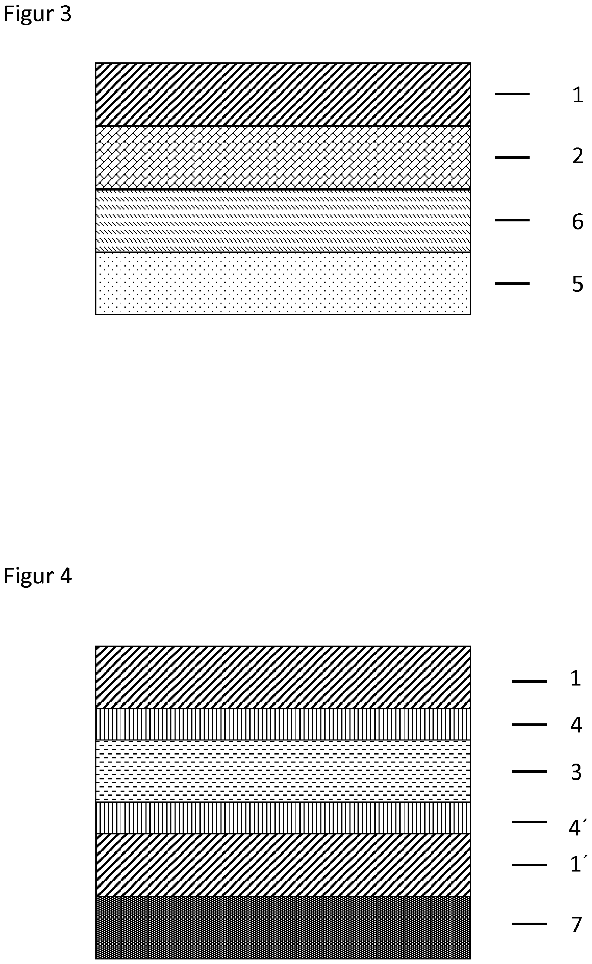

In Figur 3 wird die bevorzugte Ausführungsform eines Etiketts gezeigt. Das Etikett besteht aus den in Figur 1 gezeigtem Folienverbund, wobei auf die Polypropylenschicht 2 eine Haftklebeschicht 6 aufgebracht ist und hierauf ein Papierträger 5, vorzugsweise aus nicht-schrumpfendem Papier, aufgebracht ist.

Figur 4 zeigt eine bevorzugte Ausführungsform einer Abdeckbahn. Die Abdeckbahn besteht aus dem in Figur 2 gezeigten Folienverbund aus den Schichten 1, 4, 3, 4' und 1', wobei auf die Schicht 1' eine Schicht aus Bitumen aufgebracht ist. Zusätzlich kann auf die Oberseite der Abdeckbahn ein Antirutschbelag aufgebracht werden. Die Abdeckbahn ist insbesondere zur Abdichtung von Dachflächen geeignet. Alternativ ist auch die Verwendung einer Abdeckbahn aus den Schichten 7, 1, 4 und 3 möglich. Zweckmäßigerweise wird die klebrige Masse in beiden Alternativen mit einer Trennfolie oder Trennpapier geschützt, welches während der Applikation entfernt wird.

### Beispiele

### Anwendungsbeispiel 1:

### Etiketten-Labelfolie für Laserdrucker

Auf ein wie in Figur 3 aufgebautes Etikett wurde mit einem Laserdrucker auf der Papierseite gedruckt. Hierbei wurde die Oberfläche der Folie kurzzeitig auf 130 bis 135 °C aufgeheizt (Zeit: < 1 s). Trotz des unterschiedlichen Aufheizens und Auskühlens der von der Temperatur direkt belasteten Seite und der von der Temperaturbelastung abgewandten Seite konnte ein Curling-Effekt vermieden werden.

### Anwendungsbeispiel 2:

Bei der Herstellung einer wie in Figur 4 aufgebauten Abdeckbahn erfolgt während der Beschichtung mit Bitumen ein unterschiedliches Aufheizen und Auskühlen während des Kühlprozesses der von der Temperatur direkt belasteten Seite und der von der Temperaturbelastung aufgewandten Seite.

Die unterschiedliche Temperaturbelastung tritt insbesondere durch die übliche Gegenkühlung während oder nach der Beschichtung mit Bitumen auf. Die Folie wird hierbei von einer Seite gekühlt, während Bitumen auf die Gegenseite beschichtet wird. Dies erfolgt bei einer direkten Beschichtung mit 160 °C bis 170°C und bei einer indirekten Beschichtung mit bis zu 140 °C. Trotz der einseitigen Temperaturbelastung konnte der Curling-Effekt vermieden werden.

Zur Bewertung des Curling-Effektes wurden weiter folgende Beispiele bewertet:
In den Beispielen wurden folgende Rohstoffe verwendet:
- r-PP HeCo: random Polypropylen heterophasiges (Block)Copolymer der Firma Liondell Basel
- PP HeCo: Polypropylen heterophasiges (Block)Copolymer der Firma Prasken (Ethylen-Anteil 7 bis 9 %)
- Haftvermittelndes Polymer: mit Maleinsäureanhydrid-Gruppen modifiziertes Polypropylen der Firma Mitsui
- CoPA: Copolyamid, gebildet aus ε-Capolactam-Isophorondiamin und Isoterephthtalsäure, mit einem Isophorondiaminanteil von circa 5 % der Firma Lanxess
- r-PP: random Polypropylen-Copolymer der Firma Liondell Basell (Ethylen-Anteil 2 bis 4 %)

### Beispiel 1

Es wurde eine Folie aus einer Schicht bestehend aus 100 % r-PP HeCo mit einer Schichtdicke von 80 µm hergestellt.

### Beispiel 2

Es wurde eine Folie aus einer Schicht aus 50 % r-PP HeCo und 50 % PP HeCo mit einer Schichtdicke von 80 µm hergestellt.

### Beispiel 3

Es wurde eine Folie aus zwei Schichten hergestellt. Die erste Schicht bestand aus r-PP HeCo (50 %) und PP HeCo (50 %) mit einer Schichtdicke von 20 µm. Die zweite Schicht bestand aus 100 % PP HeCo mit einer Schichtdicke von (60 µm).

### Beispiel 4

Es wurde eine Folie aus drei Schichten hergestellt. Die erste Schicht bestand aus r-PP HeCo (50 %) und PP HeCo (50 %) und besaß eine Schichtdicke von 44 µm. Die zweite Schicht bestand aus haftvermittelnden Polymer (100 %) mit einer Schichtdicke von 6 µm. Die dritte Schicht bestand aus CoPA (100 %) mit einer Schichtdicke von 25 µm.

### Beispiel 5

Es wurde eine Folie aus fünf Schichten hergestellt. Die erste Schicht bestand aus r-PP HeCo (50 %) und PP HeCo (50 %) mit einer Schichtdicke von 44 µm. Die zweite Schicht bestand aus haftvermittelnden Polymer (100 %) mit einer Schichtdicke von 6 µm. Die dritte Schicht bestand aus CoPA (100 %) mit einer Schichtdicke von 25 µm. Die vierte Schicht bestand aus haftvermittelnden Polymer (100 %) mit einer Schichtdicke von 6 µm. Die fünfte Schicht bestand aus r-PP HeCo (50 %) und PP HeCo (50 %) mit einer Schichtdicke von 44 µm.

Zudem wurden folgende Vergleichsbeispiele hergestellt.

### Vergleichsbeispiel 1

Es wurde eine Folie aus einer Schicht bestehend aus 50 % r-PP und 50 % PP HeCo mit einer Schichtdicke von 80 µm hergestellt.

### Vergleichsbeispiel 2

Es wurde eine Folie aus zwei Schichten hergestellt. Die erste Schicht bestand aus 50 % r-PP und PP HeCo (50 %) mit einer Schichtdicke von 20 µm. Die zweite Schicht bestand aus PP HeCo (100 %) mit einer Schichtdicke von (60 µm).

### Vergleichsbeispiel 3

Es wurde eine Folie aus einer Schicht bestehend aus 100 % PP HeCo mit einer Schichtdicke von 80 µm hergestellt.

Die Beispiele und Vergleichsbeispiele wurden wie folgt bewertet:
Die Folien wurden auf einem Papierträger (Schrumpf bei 110 °C für 30 s < 1 %) mit einer selbstklebenden Masse (Klebeband der Firma 3M) fixiert und mittels einem Laserdrucker (Firma HP; Typ 1320n) bedruckt. Der Fixierprozess der Farbpartikel auf der Folie im Laserdrucker hat eine Temperatur von 130 bis 135 °C und eine Dauer von 0,5 bis 1 s.

Das Curling wird mittels folgender Bewertungsskala bestimmt:

| | |
|---|---|
| ++ | = kein Curling; |
| + | = geringes Curling; |
| - | = starkes Curling; |
| -- | = sehr starkes Curling |

Die Ergebnisse werden in Tabelle 1 gezeigt.

**Tabelle 1**

| Folienbeispiele | Curling |
|---|---|
| Beispiel 1 | ++ |
| Beispiel 2 | ++ |
| Beispiel 3 | + |
| Vergleichsbeispiel 1 | - |
| Vergleichsbeispiel 2 | - |
| Vergleichsbeispiel 3 | -- |

### Bezugszeichenliste

1 erste Schicht umfassend mindestens 50 Gew.-% statistisches heterophasiges Polypropylen-(Block)copolymer (z.B. 50% r-PP HeCo und 50% PP-HeCo)
2 zweite Schicht umfassend Polypropylen-Polymer oder Polypropylen-Copolymer (z.B. PP-HeCo)
3 gegenüber mineralischen Ölen undurchlässige Barriereschicht (z.B. PA)
4 haftvermittelnde Schicht
5 Papierträger (vorzugsweise nicht-schrumpfend)
6 Haftklebstoff
7 klebrige Masse (Bitumen oder selbstklebende Abdichtungsmasse)

## Patentansprüche

1. Etikett umfassend eine Folie, Papier (5) und Haftklebstoff (6), wobei die Folie umfasst: mindestens eine erste Schicht (1) umfassend mindestens 50 Gew.-% statistisches heterophasiges Polypropylen-(Block)copolymer.

2. Etikett nach Anspruch 1, wobei die erste Schicht (1) ein weiteres Polypropylen-Polymer oder Polypropylen-Copolymer umfasst.

3. Etikett nach Anspruch 1 oder 2, wobei die Folie eine zweite Schicht umfassend Polypropylen-Polymer oder Polypropylen-Copolymer (2) umfasst.

4. Abdeckbahn umfassend eine Folie und eine klebrige Masse (7), wobei die Folie umfasst:
mindestens eine erste Schicht (1) umfassend mindestens 50 Gew.-% statistisches heterophasiges Polypropylen-(Block)copolymer sowie gegebenenfalls ein weiteres Polypropylen-Polymer oder Polypropylen-Copolymer und
als zweite Schicht eine gegenüber mineralischen Ölen undurchlässige Barriereschicht (3).

5. Abdeckbahn nach Anspruch 4, wobei die Barriereschicht (3) ein Polyamid-Copolymer umfasst.

6. Abdeckbahn nach einem der Ansprüche 4 oder 5, wobei die Folie eine haftvermittelnde Schicht (4) zwischen den Schichten (1) und (3) umfasst.

7. Abdeckbahn nach Anspruch 6, wobei die Folie eine der Schicht (1) in der Zusammensetzung entsprechende Schicht (1') und eine zweite haftvermittelnde Schicht (4') zwischen den Schichten (3) und (1') umfasst.

8. Abdeckbahn nach einem der Ansprüche 4 bis 7, wobei die klebrige Masse (7) Bitumen oder selbstklebende Abdichtungsmasse ist.

9. Etikett oder Abdeckbahn nach einem der Ansprüche 1 bis 8, wobei die Dicke der Schicht (1) wenigstens 5µm beträgt.

10. Etikett oder Abdeckbahn nach einem der Ansprüche 1 bis 8, wobei die Gesamtdicke der Folie wenigstens 20 µm beträgt.

## Claims

1. Label comprising a film, paper (5) and a pressure-sensitive adhesive (6), wherein the film comprises at least one first layer (1) comprising at least 50 wt.% statistical heterophasic polypropylene (block) copolymer.

2. Label according to claim 1, wherein the first layer (1) comprises a further polypropylene polymer or polypropylene copolymer.

3. Label according to claim 1 or 2, wherein the film comprises a second layer comprising polypropylene polymer or polypropylene copolymer (2).

4. Cover sheet comprising a film and a tacky composition (7), wherein the film comprises:
at least one first layer (1) comprising at least 50 wt.% statistical heterophasic polypropylene (block) copolymer and optionally a further polypropylene polymer or polypropylene copolymer and
as second layer a barrier layer (3) impermeable to mineral oils.

5. Cover sheet according to claim 4, wherein the barrier layer (3) comprises a polyamide copolymer.

6. Cover sheet according to one of claims 4 or 5, wherein the film comprises a coupling layer (4) between layers (1) and (3).

7. Cover sheet according to claim 6, wherein the film comprises a layer (1') corresponding in composition to layer (1) and a second coupling layer (4') between layers (3) and (1').

8. Cover sheet according to one of claims 4 to 7, wherein the tacky composition (7) is bitumen or self-adhesive sealing composition.

9. Label or cover sheet according to one of claims 1 to 8, wherein the thickness of layer (1) amounts to at least 5 µm.

10. Label or cover sheet according to one of claims 1 to 8, wherein the total thickness of the film amounts to at least 20 µm.

## Revendications

1. Étiquette comprenant un film, du papier (5) et une masse auto-adhésive (6), dans laquelle le film comprend : au moins une première couche (1) comprenant au moins 50% en poids de (bloc)copolymère de polypropylène statistique hétérophasique .

2. Étiquette selon la revendication 1, dans laquelle la première couche (1) comprend un polymère de polypropylène ou un copolymère de polypropylène supplémentaire.

3. Étiquette selon la revendication 1 ou 2, dans laquelle le film comprend une deuxième couche comprenant un polymère de polypropylène ou un copolymère de polypropylène (2).

4. Bande de recouvrement comprenant un film et une masse collante (7), dans laquelle le film comprend :
au moins une première couche (1) comprenant au moins 50% en poids de (bloc)copolymère de polypropylène statistique hétérophasique ainsi que le cas échéant un polymère de polypropylène ou un copolymère de polypropylène supplémentaire et comme deuxième couche une couche formant barrière (3) imperméable aux huiles minérales.

5. Bande de recouvrement selon la revendication 4, dans laquelle la couche formant barrière (3) comprend un copolymère de polyamide.

6. Bande de recouvrement selon l'une des revendications 4 ou 5, dans laquelle le film comprend une couche promotrice d'adhérence (4) entre les couches (1) et (3).

7. Bande de recouvrement selon la revendication 6, dans laquelle le film comprend une couche (1') dont la composition correspond à la couche (1)
et une deuxième couche promotrice d'adhérence (4') entre les couches (3) et (1').

8. Bande de recouvrement selon l'une des revendications 4 à 7, dans laquelle la masse collante (7) est du bitume ou une masse étanchéité.

9. Étiquette ou bande de recouvrement selon l'une des revendications 1 à 8, dans laquelle l'épaisseur de la couche (1) atteint au moins 5 µm.

10. Étiquette ou bande de recouvrement selon l'une des revendications 1 à 8, dans laquelle l'épaisseur totale du film atteint au moins 20 µm.
